# EUROPÄISCHE PATENTANMELDUNG

(11) **EP 0 729 242 A1**
(43) Veröffentlichungstag der Anmeldung: **28.08.1996**
(21) Anmeldenummer: 96250041.9
(22) Anmeldetag: 16.02.1996
(51) Int. Cl.: H04B 10/00

(54) **Schaltung zum Ein- und/oder Ausgeben von Daten unter Verwendung von Optokopplern**

(30) Priorität: 22.02.1995 DE 19507835
(71) Anmelder: SIEMENS AKTIENGESELLSCHAFT, 80333 München (DE)
(72) Erfinder: Neske, Dietrich, Dr., 38124 Braunschweig (DE)

(57) **Zusammenfassung**

Der Pegel des von einem Optokoppler (OK1) geschalteten Signals wird über einen Fensterdiskriminator (OP1, OP2, EX1) daraufhin überwacht, ob er innerhalb eines kritischen Bereiches zwischen einem unteren und oberen vorgegebenen Schwellwert liegt. Ist dies der Fall, so wird das am Optokoppler abgreifbare Signal mehr oder weniger zufällig als "High"- oder Low"-Signal bewertet. Ein solcher Fall kann auftreten bei Aderberührungen zwischen den zu mehreren Optokopplern führenden Signalleitungen. Beim Erkennen eines solchen im "Medium"-Bereich liegenden Signals veranlaßt eine gemeinsame Auswerteeinrichtung (AS) das Auftrennen aller Signalleitungen, die von der gemeinsamen Auswerteeinrichtung überwacht werden. Für die Funktionsprüfung der Fensterdiskriminatoren besteht die Möglichkeit, diesen Eingangssignale auf unterschiedlichem Signalpegel zuzuführen und ihre Reaktionen in einem Verarbeitungsrechner auszuwerten.

## Beschreibung

Schaltung zum Ein- und/oder Ausgeben von Daten unter Verwendung von Optokopplern

Die Erfindung betrifft eine Schaltung nach dem Oberbegriff des Patentanspruches 1.

Bei der Übertragung digitaler Signale zwischen verschiedenen Geräten oder innerhalb eines Gerätes ist es bekannt, zur galvanischen Trennung von Quelle und Senke Optokoppler zu verwenden. Durch Herstellungstoleranzen sind die Kennlinien von Optokopplern starken Streuungen unterworfen. Üblicherweise werden Optokopplern zur Impulsformung Schwellwertschalter (ohne Hysteresis) oder Schmitt-Trigger (mit Hysteresis) nachgeschaltet, deren Schwellen ebenfalls toleranzbehaftet sind. Exemplar-, temperatur- und alterungsabhängig ergibt sich dadurch ein Eingangssignalbereich, in dem das Ausgangssignal nicht zuverlässig vorhergesagt werden kann (undefinierter Bereich).

Bei der Verarbeitung digitaler Daten besteht eine typische Anwendung darin, parallele Datenströme zwischen Geräten oder Geräteteilen über Kabel mit zwei oder mehr Signaladern zu übertragen, wobei jede Ader in der Senke auf einen gesonderten Optokoppler arbeitet. Durch entsprechende Dimensionierung der Treiberschaltung in der Quelle und des Vorwiderstandes für den Optokoppler in der Senke kann man in der Regel erreichen, daß das Eingangssignal für den Optokoppler bei beiden logischen Zuständen außerhalb des undefinierten Bereiches liegt und damit auch bei einem ungünstigen Zusammentreffen der Toleranzen aller beteiligten Bauelemente die Zustände "High" und "Low" von der nachfolgenden logischen Schaltung eindeutig erkannt werden (Worst-case-Dimensionierung).

Bei sicherheitsrelevanten Anwendungen müssen jedoch neben der "Normalfunktion" einer Anordnung auch die Auswirkungen von Bauelementeausfällen, driftartigen Veränderungen durch Alterung usw., sowie gegebenenfalls von Schlüssen oder Unterbrechungen betrachtet werden, da bei keinem in Betracht kommenden Szenarium ein Signal oder eine Signalkombination auftreten darf, die zu einer Gefährdung führen kann.

Muß aufgrund der gegebenen Umstände möglicherweise mit einem Schluß zwischen zwei Signaladern gerechnet werden, so ist es wichtig zu untersuchen, wie sich dieser Fehler in der Senke auswirkt. Wurde in der Quelle eine Treiberschaltung gewählt, bei der ein nichtangesteuerter Treiber am Ausgang hochohmig ist und ist die Stromergiebigkeit eines angesteuerten Treibers so groß, daß er im Falle eines Schlusses mit der an den nicht angesteuerten Treiber angeschlossenen Ader in der Lage ist, die Optokoppler beider Adern durchzusteuern, so wird das für die eine Ader vorgesehene Signal in der Senke auf beiden Adern detektiert. Durch Verwendung eines entsprechenden Verfahrens, das z.B. auf den verwendeten Adern zu jeder Zeit nur ein einziges aktives Signal vorsieht, kann dieser Zustand bei der Auswertung der Signale in der Senke als Fehler erkannt und mit einer sicheren Reaktion beantwortet werden.

Ist jedoch die Stromergiebigkeit des angesteuerten Treibers zuvor durch Driftvorgänge soweit abgesunken, daß der Strom zwar zur Durchsteuerung eines einzelnen Optokopplers im Normalzustand noch ausreicht, bei einem Schluß mit einer anderen Ader aber beide Optokoppler in ihren undefinierten Bereich gelangen, so ist die Interpretation der anliegenden Signale von der zufälligen Verteilung der Ansprechschwellen der Optokoppler abhängig: Mit einer bestimmten Wahrscheinlichkeit kann das Signal auf der eigentlich signallosen Ader gerade detektiert werden, auf der eigentlich angesteuerten Ader aber nicht. In der Senke ist das Signal somit von einer Ader auf die andere gewechselt. Da es mit dem beschriebenen Verfahren nicht möglich ist, diesen Fehler zu erkennen, kann es zur Ausgabe einer falschen Information und damit möglicherweise zu einer gefährlichen Situation kommen.

Dem beschriebenen Vorgang kann durch Dimensionierung höherer Ströme nicht begegnet werden, da das Herabdriften der Stromergiebigkeit in beliebiger Weise erfolgen kann. Die Forderung nach genau gleichen Schwellen aller beteiligten Optokoppler ist aufgrund von Alterungsvorgängen unrealistisch. Auch der Übergang vom Arbeitsstromprinzip, bei dem eine Ader ohne Signal stromlos ist, zum Ruhestromprinzip, bei dem die Ader ohne Signal Strom führt, bringt keine grundsätzliche Veränderung der Verhältnisse. Nach dem gegenwärtigen Stand der Technik bieten sich zur Lösung des Problems nur mehrkanalige Ausführungen an, die aber stets auch einen mehrfachen Aufwand an Kabeln sowie zugehörigen Treibern, Optokopplern und Steckverbindern erfordern (Signal + Draht 68(1976)10, Seiten 203-207).

Ziel der Erfindung ist es, für das geschilderte Problem eine Lösung anzugeben, die ohne mehrkanalige Ausführungen auskommt. Dazu besteht die Aufgabe, eine Schaltung zur Verwendung von Optokopplern bei der Übertragung von digitalen, sicherheitsrelevanten Signalen gemäß dem Oberbegriff des Patentanspruches 1 zu schaffen, mit der nach dem Absinken der Stromergiebigkeit der Quelle Fehlinterpretationen im Falle eines Schlusses mit einer anderen Ader vermieden werden können.

Erfindungsgemäß wird diese Aufgabe durch die Anwendung der kennzeichnenden Merkmale des Patentanspruches 1 gelöst. Jedem Optokoppler ist dabei außer einer Signalformungsschaltung zusätzlich ein Fensterdiskriminator nachgeschaltet, der Signale, die in einem zwischen "High" und "Low" liegenden "Medium"-Bereich liegen, detektiert. Der "Medium"-Bereich ist so dimensioniert, daß er den undefinierten Ausgangsspannungsbereich des Optokopplers umfaßt. Die Ausgangssignale der Fensterdiskriminatoren werden einer für alle sich möglicherweise gegenseitig beeinflussenden Signaladern gemeinsamen Auswerteeinrichtung zugeführt, die bei Auftreten eines im "Medium"-Bereich liegenden Signals alle diese Signaladern für die weitere Verarbeitung für die Dauer des Signals oder für eine längere Dauer sperrt, d.h., je nachdem, ob die Schaltung nach dem Arbeitstrom- oder nach dem Ruhestromprinzip arbeitet, wird der Ausgang der Adern auf "Low" oder auf "High" gelegt. Um zu verhindern, daß normale, mit einer endlichen Flankensteilheit erfolgende Signalübergänge zwischen "High" und "Low" bereits zu einer Reaktion der Auswerteschaltung führen, ist es zweckmäßig, den Fensterdiskriminatoren einzeln oder gemeinsam einen Tiefpaß nachzuschalten, der Impulse, die deutlich kürzer als die Impulsdauer der Signale sind, unterdrückt. Die Auswerteschaltung kann z.B. aus einem logischen UND-Glied bestehen, durch dessen Ausgangssignal alle Signaladern auf Ruhepotential gebracht werden. Werden die Signale für die weitere Verarbeitung in einem Rechner mit einer deutlich über der Impulsfolgefrequenz der Signale liegenden Frequenz abgetastet, so ist es zweckmäßig, den Ausgang des UND-Gliedes ebenfalls abzutasten und die Sperrung der Signale im Rahmen der logischen Verarbeitung der Abtastwerte im Rechner vorzunehmen. Um eine gleichzeitige und gleichsinnige Veränderung der Schwellen aller Fensterdiskriminatoren durch einen einzelnen Bauelementefehler zu verhindern, ist es vorteilhaft, die Spannungen zur Festlegung der Ansprechschwellen unabhängig voneinander zu erzeugen. Durch Prüfsignale, die vom Verarbeitungsrechner z.B. hinter dem Optokoppler in die Schaltung eingespeist werden können, ist es möglich, Veränderungen der Schaltung in definierten Zeitabständen zu offenbaren. Zur Impulsformung ist es zweckmäßig, Schmitt-Triggerschaltungen zu verwenden, da bei diesen für einen High/Low- oder Low/High-Übergang im Vergleich zu Schwellwertschaltungen größere Signalhübe erforderlich sind und der undefinierte Bereich dadurch eingeschränkt wird.

Die erfindungsgemäße Schaltung hat den Vorteil, daß Verminderungen der Stromergiebigkeit weitgehend bereits vor einem eventuellen Eintreten eines Schlusses durch das Auftreten von Signalen im "Medium"-Bereich offenbart werden. Hat sich die Stromergiebigkeit jedoch nur soweit vermindert, daß die Signale erst bei Eintritt eines Schlusses im "Medium"-Bereich liegen, so wird die Ausgabe falscher Informationen durch die gleichzeitige Sperrung aller Signaladern verhindert. Durch die Auswertung der Signale der Fensterdiskriminatoren wird der Fehler offenbart. Von Vorteil ist dabei, daß eine wesentliche Fensterverschiebung mit hoher Wahrscheinlichkeit schon innerhalb des normalen Betriebes offenbart wird, bevor ein weiterer Fehler eintritt. Da die Schaltung für Prüfsignale gut zugänglich ist, können Veränderung durch regelmäßige Prüfungen in definierten Zeitabschnitten offenbart werden.

Der Aufwand der vorgeschlagenen Schaltung ist im Vergleich zu zweikanaligen Anordnungen mit einer verdoppelten Anzahl von Treiberschaltungen und Optokopplern wesentlich geringer. Bei der Verbindung räumlich getrennter Einrichtungen fällt der Wegfall eines zweiten Kabels, was häufig durch kaum beeinflußbare äußere Gegebenheiten große Schwierigkeiten bereitet, besonders ins Gewicht.

Die Erfindung soll nachfolgend anhand von Ausführungsbeispielen näher erläutert werden. Dazu zeigt
- Figur 1: in ausschnittsweiser Darstellung das Blockschaltbild einer erfindungsgemäßen Schaltung mit hardwareseitiger Beeinflussung der Signaladern und
- Figur 2: das entsprechende Blockschaltbild einer erfindungsgemäßen Schaltung mit softwaremäßiger Beeinflussung der Signaladern.
- Figur 3: zeigt ein schaltungstechnisches Ausführungbeispiel für die Schaltung nach Figur 1.

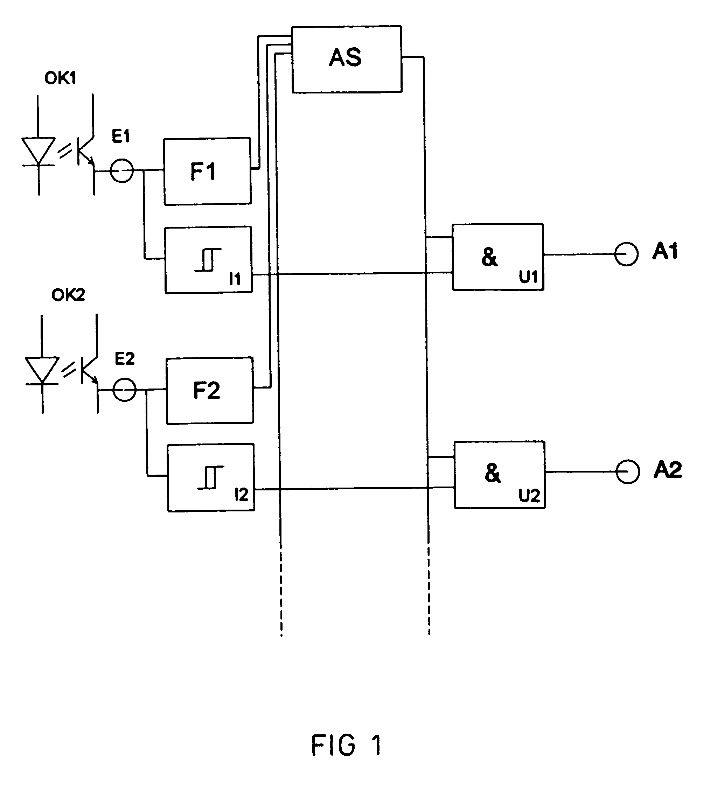

In Figur 1 sind stellvertretend für eine Vielzahl von gesondert ansteuerbaren Optokopplern zwei Optokoppler OK1, OK2 dargestellt. Der Ausgang jedes Optokopplers ist über eine Eingangsklemme Ev (v=1...n, n= Anzahl der Optokoppler) parallel mit einem Fensterdiskriminator Fv und einer Impulsformungsschaltung Iv verbunden. Die Ausgänge aller Fensterdiskriminatoren gehen zu einer Auswerteschaltung AS, deren Ausgang mit logischen UND-Gliedern Uv in allen Signaladern verbunden ist. Im Normalfall, d. h. bei voller Durchsteuerung der Optokoppler, gelangen die Ausgangssignale der Optokoppler nach Durchlaufen der Impulsformungsschaltungen unbeeinflußt zu Ausgängen Av. Wenn Optokoppler jedoch z. B. durch einen Schluß zwischen zwei oder mehr die Optokoppler steuernden Signaladern nicht ordnungsgemäß durchgesteuert werden, entsteht an ihrem Ausgang eine Spannung, die in einem "Medium"-Bereich zwischen den Schwellwerten für die logischen Pegel "High" und "Low" der Impulsformungsschaltung liegt. Da die Fensterdiskriminatoren so ausgebildet sind, daß sie auf das Vorhandensein eines Signals im "Medium"-Bereich reagieren, spricht der dazugehörige Fensterdiskriminator an und gibt ein Indikatorsignal an die Auswerteschaltung ab. Die Auswerteschaltung führt eine Verknüpfung der Indikatorsignale der Fensterdiskriminatoren aller Signaladern in dem Sinne durch, daß das Indikatorensignal eines Fensterdiskriminators ausreicht, um die Auswerteschaltung zu aktivieren. Das resultierende Signal durchläuft einen in der Zeichnung nicht dargestellten Tiefpass, der das Ansprechen der Schaltung auf kurze, bei normalen High/Low- oder Low/High-Übergängen entstehende Impulse verhindert. Danach wird das Ausgangssignal der Auswerteschaltung zu in allen Adern befindlichen Logikgliedern geführt, die die Adern bei aktiver Auswerteschaltung auf Ruhepotential setzen.

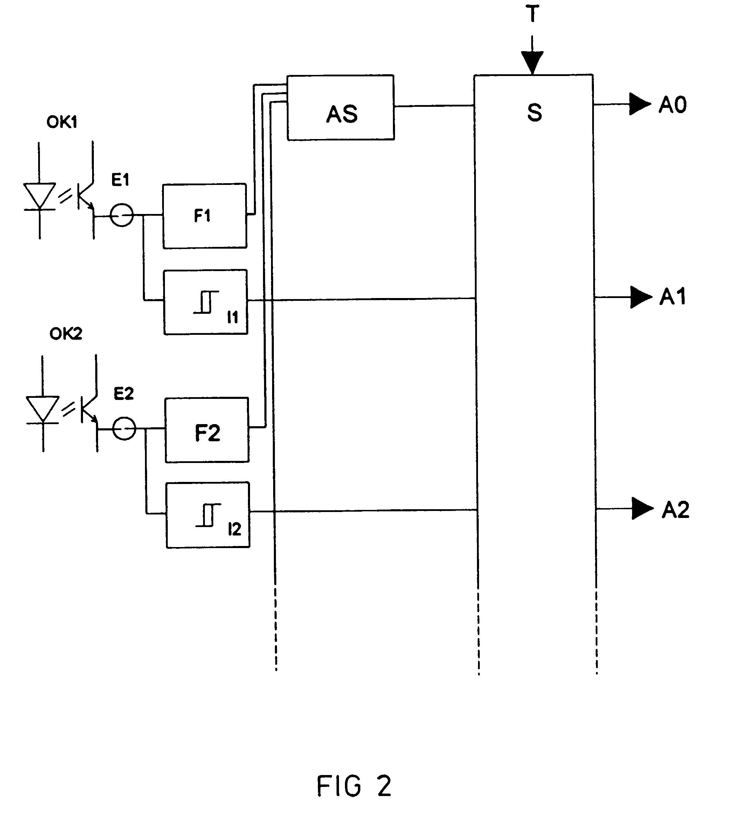

In Figur 2 sind die Ausgänge der Impulsformungsschaltungen Iv mit einer Abtastschaltung S verbunden, in der die Signale mit einem im Vergleich zur Signalimpulsdauer deutlich kürzeren Takt T abgetastet und als Worte für die weitere Verarbeitung zur Verfügung gestellt werden. Der Ausgang der Auswerteschaltung AS wird dabei in die Abtastung mit einbezogen. Die Auswertung der Abtastwerte erfolgt softwaremäßig in einem Verarbeitungsrechner. Ein Tiefpaß kann entfallen, wenn die Verarbeitungssoftware so ausgestaltet ist, daß die Verarbeitung der Signale erst abgebrochen wird, wenn ein "Medium"-Signal mehrere Abtastwerte nacheinander auftritt. Mit Hilfe der Software kann auch das Auftreten eines Signals im "Medium"-Bereich in geeigneter Weise signalisiert werden, so daß der Fehler offenbart wird.

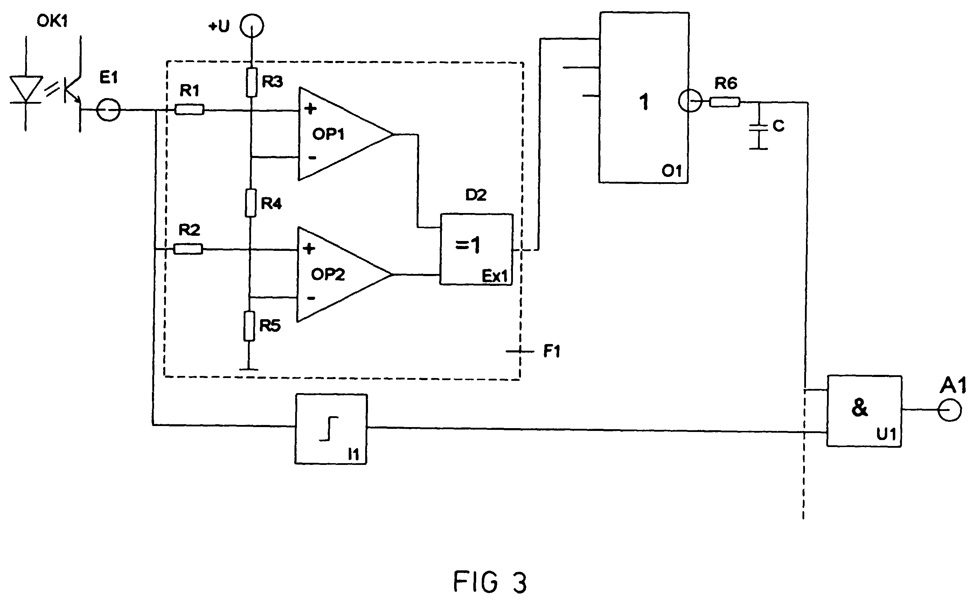

Figur 3 zeigt eine mögliche schaltungstechnische Realisierung der Anordnung nach Figur 1. Das Signal eines Optokopplers OK1 wird über einen Eingang E1 parallel an nichtinvertierende Eingänge von zwei Operationsverstärkern OP1, OP2 geführt. Ihre invertierenden Eingänge liegen über einen gemeinsamen, aus einer Spannungsquelle U gespeisten Spannungsteiler R3, R4, R5 auf verschiedenen Potentialen, die den oberen und den unteren Schwellwert des "Medium"-Bereiches definieren. Übersteigt das über R1 bzw. R2 den nichtinvertierenden Eingängen der Operationsverstärker zugeführte Eingangspotential die festgelegte Grenze zwischen "Low" und "Medium", so schaltet der Operationsverstärker OP2 durch; an seinem Ausgang entsteht ein High-Signal. Überschreitet das Eingangspotential die festgelegte Grenze zum High-Pegel, so wechselt auch der Ausgang des Operationsverstärkers OP1 von Low auf High. Die Ausgänge sind mit einem EXOR-Glied EX1 verbunden. Sein Ausgang weist Low-Pegel auf, wenn die Potentiale an den Ausgängen der beiden Operationsverstärker gleich sind, also die Ausgangsspannung des Optokopplers im "High"- oder im "Low"-Bereich liegt. Im "Mediun"-Bereich sind die Ausgangspotentiale der beiden Operationsverstärker unterschiedlich und der Ausgang des EXOR-Gliedes liegt auf High-Pegel. Die Auswerteschaltung ist mit einem Mehrfach-OR-Glied 01 realisiert, dessen Ausgang negiert ist. Das nachgeschaltete RC-Glied R6, C verhindert ein Ansprechen der Schaltung auf kurzzeitige Pegel im "Medium"-Bereich, wie sie beim normalen Umsteuern der Optokoppler auftreten.

Um eventuelle Ausfälle der Schaltung innerhalb einer vorgegebenen Offenbarungszeit erkennen zu können, kann in bestimmten Abständen eine Prüfung erforderlich sein. Das kann z. B. dadurch erfolgen, daß Stufensignale auf ihre Eingänge gegeben werden, während vom Verarbeitungsrechner die Ausgangssignale des Schwellwertschalters und der Auswerteschaltung auf ordnungsgemäßes Arbeiten kontrolliert werden. Die Anordnung nach Figur 2 ist hierfür besonders geeignet.

Wie bei den Ausführungsbeispielen nach Figur 1 und 2 werden die Ausgangssignale der Optokoppler mit Impulsformern Iv regeneriert. Für die Realisierung dieser Impulsformer gibt es bewährte integrierte Schaltkreise.

## Patentansprüche

1. Schaltung zum Ein- und/oder Ausgeben von Daten unter Verwendung von Optokopplern für die Übertragung von digitalen, sicherheitsrelevanten parallelen Datenströmen zwischen Geräten oder Geräteteilen über Kabel mit mindestens zwei Signaladern,
**dadurch gekennzeichnet**,
daß jedem Optokoppler (OK1, OK2) ein Fensterdiskriminator (F1, F2) nachgeschaltet ist, der Signale in einem zwischen "High" und "Low" liegenden "Medium"-Bereich oder Signale außerhalb dieses Bereiches detektiert, und daß die Ausgänge aller Fensterdiskriminatoren mit einer gemeinsamen Auswerteeinrichtung (AS) verbunden sind, die beim Auftreten eines Signals im "Medium"-Bereich die weitere Verarbeitung aller auf den Signaladern liegenden Signale sperrt.

2. Schaltung nach Anspruch 1,
**dadurch gekennzeichnet**,
daß jeder Fensterdiskriminator eine eigene, von dem anderen Fensterdiskriminatoren unabhängige Einrichtung (R1 bis R5, OP1, OP2) zur Festlegung der zu bewertenden Signalschwellen besitzt.

3. Schaltung nach Anspruch 1 oder 2,
**dadurch gekennzeichnet**,
daß der Auswerteeinrichtung oder den Fensterdiskriminatoren Tiefpässe (R6, C) zugeordnet sind zum Unterdrücken kurzer, von den High/Low- oder Low/High-Übergängen der zu bewertenden Optokoppler-Signale herrührenden Signale im "Medium"-Bereich.

4. Schaltung nach Anspruch 1 oder 3,
**dadurch gekennzeichnet**,
daß die gemeinsame Auswerteeinrichtung (AS) als ODER-Schaltung mit negierendem Ausgang oder als UND-Schaltung ausgeführt ist, deren Ausgangssignal die Steuereingänge von UND-Gliedern (U1, U2) in den Signaladern beaufschlagt.

5. Schaltung nach einem der Ansprüche 1 bis 4,
**dadurch gekennzeichnet**,
daß die Sperrung der auf den Signaladern liegenden Signale durch einen Verarbeitungsrechner erfolgt, welcher die Optokoppler-Schaltsignale bzw. daraus abgeleitete Signale und die an den Fensterdiskriminatoren und/oder der gemeinsame Auswerteeinrichtung abgreifbare Signale zyklisch abtastet und bewertet.

6. Schaltung nach Anspruch 5,
**dadurch gekennzeichnet**,
daß der Verarbeitungsrechner den Fensterdiskriminatoren in vorgegebenen Zeitabständen oder ereignisgesteuert Prüfsignale mit außerhalb oder innerhalb des "Medium"-Bereiches liegendem Pegel zuführt und dabei die Reaktionen der Fensterdiskriminatoren zu deren Funktionsprüfung bewertet.

7. Schaltung nach einem der Ansprüche 1 bis 6,
**dadurch gekennzeichnet**,
daß die Signalleitungen zwischen Ein- und Ausgang der Schaltung Schmitt-Trigger zur Signalformung aufweisen.
